# EUROPEAN PATENT APPLICATION

(11) **EP 2 442 047 A1**
(43) Date of publication of application: **18.04.2012**
(21) Application number: 10786153.6
(22) Date of filing: 08.06.2010
(51) Int. Cl.: F24J 2/24, F02C 1/05, F03G 6/00, F24J 2/10

(54) **SOLAR HEAT RECEIVER**

(30) Priority: 09.06.2009 JP 2009138576
(71) Applicant: Mitsubishi Heavy Industries, Ltd., Tokyo 108-8215 (JP)
(72) Inventor: AOYAMA, Kuniaki, Takasago-shi Hyogo 676-8686 (JP); INOUE, Kei, Takasago-shi Hyogo 676-8686 (JP); KOBAYASHI, Kazuta, Takasago-shi Hyogo 676-8686 (JP)
(74) Representative: Henkel, Breuer & Partner
(86) International application number: PCT/JP2010/059674
(87) International publication number: WO 2010/143622

(57) **Abstract**

Heat transfer pipes uniformly heat a compressible working fluid passing there through with a simplified supporting structure and reduced manufacturing costs. A solar central receiver (3) on top of a tower on the ground includes heat transfer pipes (16) arranged in the south-north direction; and a casing (14) accommodating the pipes (16) and has a solar radiation inlet (15) through which sunlight reflected by heliostats on the ground is transmitted to the lower surface side of the pipes (16). The pipes (16) are at equal intervals on a solar radiation receiving surface (11) parallel to a heliostat field on which the collectors are, or inclined with respect to the heliostat field on which the collectors are, and the diameters of the pipes (16) are substantially inversely proportional to the shortest distance from the inlet (15) to the central axes of the respective pipes (16) in the longitudinal direction.

## Description

### {Technical Field}

The present invention relates to a solar central receiver that heats and raises the temperature of a compressible working fluid passing through heat transfer pipes with the heat of sunlight.

### {Background Art}

There is known a solar central receiver (solar radiation collector) that heats and raises the temperature of a compressible working fluid passing through heat transfer pipes with the heat of sunlight, which is disclosed in, for example, PTL 1.

### {Citation List}

### {Patent Literature}

{PTL 1}
   Japanese Unexamined Patent Application, Publication No. Hei 2-52953

### {Disclosure of Invention}

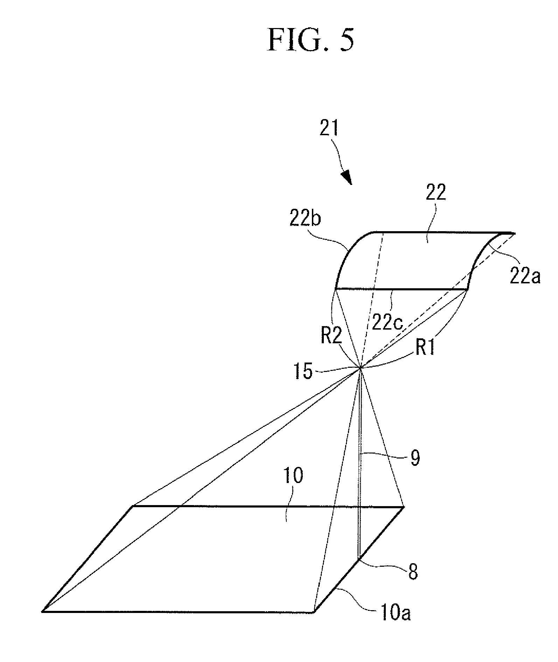

However, in a solar central receiver (heat receiver/accumulator) 1 disclosed in FIG. 5 of the above-mentioned PTL 1, a plurality of heat transfer pipes (heat transfer pipes having heat accumulating members) 14 are disposed in a cylindrical configuration around the central axis extending through the center of a solar radiation inlet (opening) 15. The amount of heat input differs between the heat transfer pipes 14 that are exposed to intense sunlight and the heat transfer pipes 14 that are exposed to diffuse sunlight, which leads to a problem in that a compressible working fluid passing through the heat transfer pipes 14 cannot be uniformly (evenly) heated.
Furthermore, the solar central receiver 1 disclosed in FIG. 5 of the above-mentioned PTL 1 has another problem in that, because a plurality of heat transfer pipes 14 are disposed in a cylindrical configuration, a supporting structure for supporting these heat transfer pipes 14 becomes complex, which increases the manufacturing costs.

The present invention has been made in view of the above-described circumstances, and an object thereof is to provide a solar central receiver that can uniformly heat a compressible working fluid passing through heat transfer pipes, can simplify a supporting structure for supporting the heat transfer pipes, and can reduce the manufacturing costs.

To overcome the above-described problems, the present invention employs the following solutions.
A solar central receiver of the present invention includes a plurality of heat transfer pipes arranged in the south-north direction; and a casing accommodating the heat transfer pipes and having a solar radiation inlet through which sunlight reflected by light collectors disposed on the ground is transmitted to the lower surface side of the heat transfer pipes, the solar central receiver being disposed on top of a tower erected on the ground. The heat transfer pipes are disposed at equal intervals on a solar radiation receiving surface parallel to a heliostat field on which the light collectors are disposed or a solar radiation receiving surface inclined with respect to the heliostat field on which the light collectors are disposed, and the pipe diameter of each heat transfer pipe is defined so as to be substantially inversely proportional to the shortest distance from the solar radiation inlet to the central axis of the heat transfer pipe in the longitudinal direction.

With the solar central receiver of the present invention, the pipe diameters of the heat transfer pipes are determined (defined) according to the distribution of the received heat at the solar radiation receiving surface in the arrangement direction (the east-west direction). That is, the heat transfer pipe having the largest pipe diameter is disposed at the center (central portion) in the arrangement direction, where the amount of heat received is greatest, and the heat transfer pipes having the smallest pipe diameter are disposed at both ends (both end portions) in the arrangement direction, where the amount of heat received is smallest.
With this configuration, the compressible working fluid passing through the respective heat transfer pipes can be uniformly (evenly) heated, and the temperature of the compressible working fluid flowing out of the respective heat transfer pipes can be made (arranged) to be uniform (even).
Furthermore, because the heat transfer pipes are arranged along the solar radiation receiving surface parallel to the heliostat field, in other words, a flat surface, the supporting structure for supporting the heat transfer pipes can be simplified, whereby the manufacturing costs can be reduced.

A solar central receiver of the present invention includes a plurality of heat transfer pipes having the same pipe diameter that are arranged in the south-north direction; and a casing accommodating the heat transfer pipes and having a solar radiation inlet through which sunlight reflected by heliostats disposed on the ground is transmitted to the lower surface side of the heat transfer pipes, the solar central receiver being disposed on top of a tower erected on the ground. A first edge defining the south end in the northern hemisphere or defining the north end in the southern hemisphere, and a second edge defining the north end in the northern hemisphere or defining the south end in the southern hemisphere are recessed toward the side opposite to the solar radiation inlet, and the heat transfer pipes are disposed at equal intervals on a solar radiation receiving surface whose first edge and second edge are located at the same distance from the solar radiation inlet.

With the solar central receiver of the present invention, the solar radiation receiving surface is determined (defined) such that the amounts of heat received by the respective heat transfer pipes on the solar radiation receiving surface in the arrangement direction (the east-west direction) of the heat transfer pipes are uniform (even).
With this configuration, the compressible working fluid passing through the respective heat transfer pipes can be uniformly (evenly) heated, and the temperature of the compressible working fluid flowing out of the respective heat transfer pipes can be made (arranged) to be uniform (even).
Furthermore, because the heat transfer pipes are arranged along the curved surface whose central portion in the arrangement direction (the east-west direction) protrudes toward the side opposite to the solar radiation inlet, the supporting structure for supporting the heat transfer pipes can be simplified, whereby the manufacturing costs can be reduced.
Furthermore, because only the heat transfer pipes having the same pipe diameter are required (the solar central receiver is formed only of the heat transfer pipes having the same pipe diameter), the supporting structure for supporting the heat transfer pipes can be further simplified, whereby the manufacturing costs can be further reduced.

A solar central receiver of the present invention includes a plurality of heat transfer pipes having the same pipe diameter that are arranged in the south-north direction; and a casing accommodating the heat transfer pipes and having a solar radiation inlet through which sunlight reflected by heliostats disposed on the ground is transmitted to the lower surface side of the heat transfer pipes, the solar central receiver being disposed on top of a tower erected on the ground. The heat transfer pipes are disposed on a solar radiation receiving surface parallel to a heliostat field on which the heliostats are disposed or a solar radiation receiving surface inclined with respect to the heliostat field on which the heliostats are disposed, and the distances between the heat transfer pipes are defined so as to be substantially proportional to the shortest distance to the heliostats disposed on one edge of the heliostat field, the edge being located at a position point symmetrical with respect to the solar radiation inlet and located at the south end in the northern hemisphere or at the north end in the southern hemisphere.

In the solar central receiver of the present invention, the distances between (density of) the heat transfer pipes are determined (defined) according to the distribution of the received heat at the solar radiation receiving surface in the arrangement direction (the east-west direction). That is, the heat transfer pipes are disposed most densely at the center (the central portion) in the arrangement direction, where the amount of heat received is greatest, and the heat transfer pipes are disposed less densely at both ends (both end portions) in the arrangement direction, where the amount of heat received is smallest.
With this configuration, the compressible working fluid passing through the respective heat transfer pipes can be uniformly (evenly) heated, and the temperature of the compressible working fluid flowing out of the respective heat transfer pipes can be made (arranged) to be uniform (even).
Furthermore, because the heat transfer pipes are arranged along the solar radiation receiving surface parallel to the heliostat field, in other words, a flat surface, the supporting structure for supporting the heat transfer pipes can be simplified, whereby the manufacturing costs can be reduced.
Furthermore, because only the heat transfer pipes having the same pipe diameter are required (the solar central receiver is formed only of the heat transfer pipes having the same pipe diameter), the supporting structure for supporting the heat transfer pipes can be further simplified, whereby the manufacturing costs can be further reduced.

The concentrated solar power gas turbine of the present invention includes the solar central receiver that can uniformly heat the compressible working fluid passing through the heat transfer pipes, can simplify the supporting structure for supporting the heat transfer pipes, and can reduce the manufacturing costs.

With the concentrated solar power gas turbine of the present invention, by uniformly heating the compressible working fluid passing through the heat transfer pipes, the temperature of the compressible working fluid directed from the solar central receiver to the turbine is raised to a higher value than by a conventional configuration. Thus, the turbine efficiency can be improved compared with the conventional configuration.

A concentrated solar power gas turbine of the present invention includes heliostats disposed on a heliostat field defined on the ground; and a solar central receiver including a plurality of heat transfer pipes having the same pipe diameter that are arranged in the south-north direction, and a casing accommodating the heat transfer pipes and having a solar radiation inlet through which sunlight reflected by the heliostats is transmitted to the lower surface side of the heat transfer pipes, the solar central receiver being disposed on top of a tower erected on the ground. The heat transfer pipes are disposed at equal intervals on a solar radiation receiving surface parallel to a heliostat field on which the heliostats are disposed or a solar radiation receiving surface inclined with respect to the heliostat field on which the heliostats are disposed, and the distances between the heliostats in the east-west direction are defined so as to be substantially inversely proportional to the shortest distance to the heliostats disposed on one edge of the heliostat field, the edge being located at a position point symmetrical with respect to the solar radiation inlet and located at the south end in the northern hemisphere or at the north end in the southern hemisphere.

With the concentrated solar power gas turbine of the present invention, the distance between (density of) the heliostats in the east-west direction is determined (defined) so as to achieve a uniform (even) distribution of the received heat over the solar radiation receiving surface in the arrangement direction (the east-west direction).
With this configuration, the compressible working fluid passing through the respective heat transfer pipes can be uniformly (evenly) heated, and the temperature of the compressible working fluid flowing out of the respective heat transfer pipes can be made (arranged) to be uniform (even). Thus, the temperature of the compressible working fluid directed from the solar central receiver to the turbine can be raised to a higher value than by the conventional configuration, and the turbine efficiency can be improved compared with the conventional configuration.
Furthermore, because the heat transfer pipes are arranged along the solar radiation receiving surface parallel to the heliostat field, in other words, a flat surface, the supporting structure for supporting the heat transfer pipes can be simplified, whereby the manufacturing costs can be reduced.
Furthermore, because only the heat transfer pipes having the same pipe diameter are required (the solar central receiver is formed only of the heat transfer pipes having the same pipe diameter), the supporting structure for supporting the heat transfer pipes can be further simplified, whereby the manufacturing costs can be further reduced.

The concentrated-solar-power-gas turbine power generation equipment of the present invention includes the concentrated solar power gas turbine having a higher efficiency than the conventional turbine.

With the concentrated-solar-power-gas turbine power generation equipment of the present invention, the power generation efficiency is increased compared with the conventional configuration. Accordingly, the energy recovery rate can be improved, and the reliability can be improved.

The solar central receiver of the present invention provides advantages in that the compressible working fluid passing through the heat transfer pipes can be uniformly heated, the supporting structure for supporting the heat transfer pipes can be simplified, and the manufacturing costs can be reduced.

### {Brief Description of Drawings}

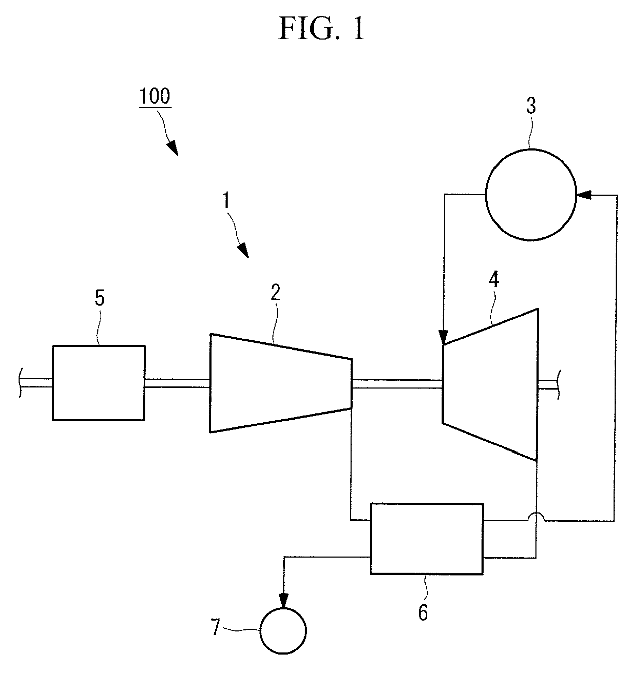

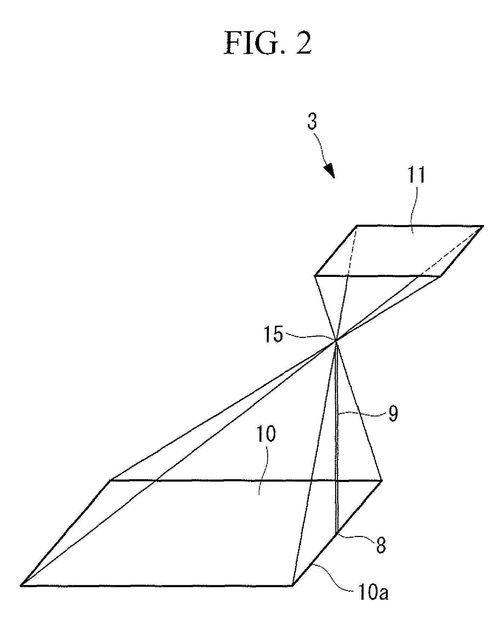

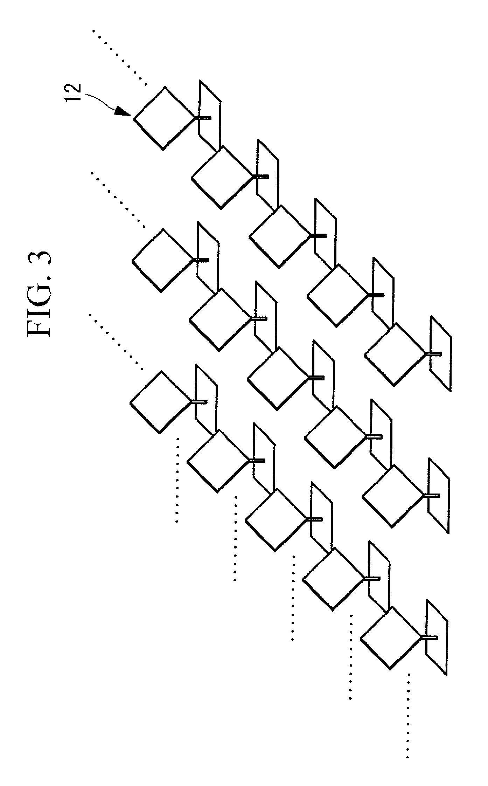

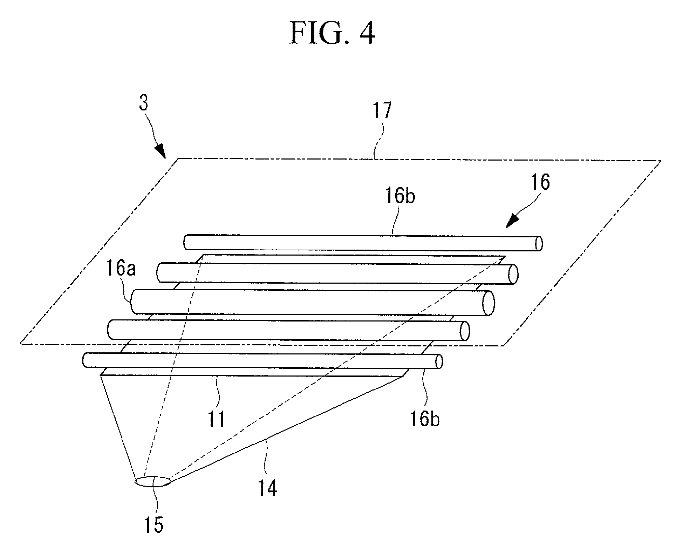

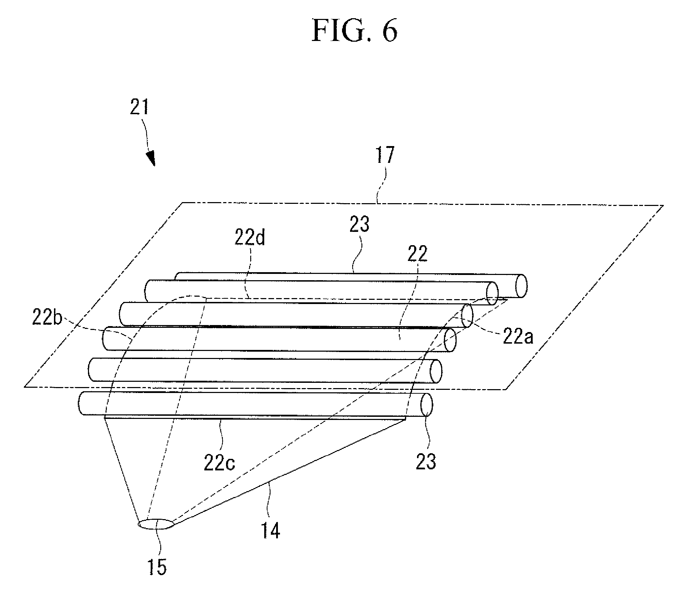

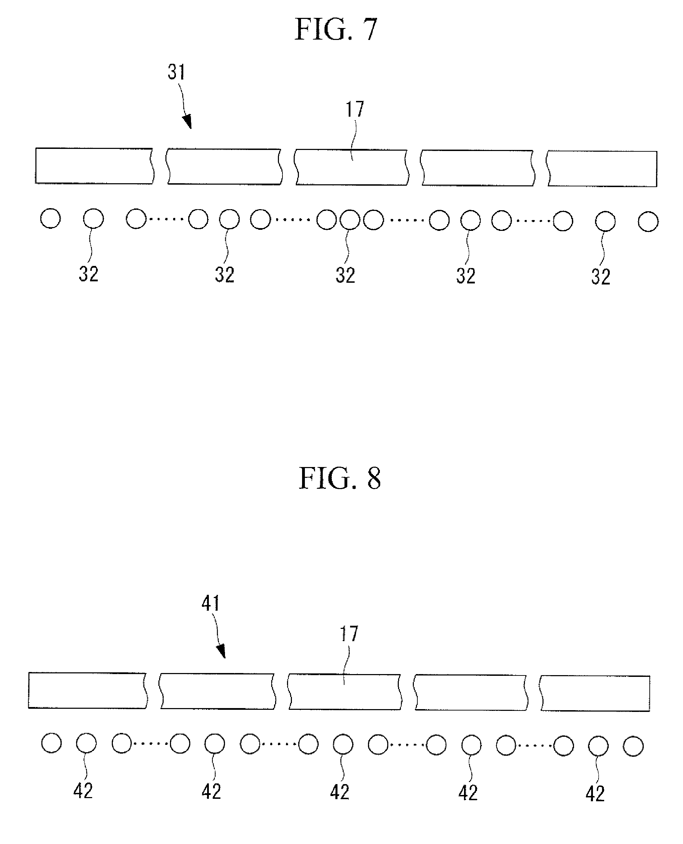

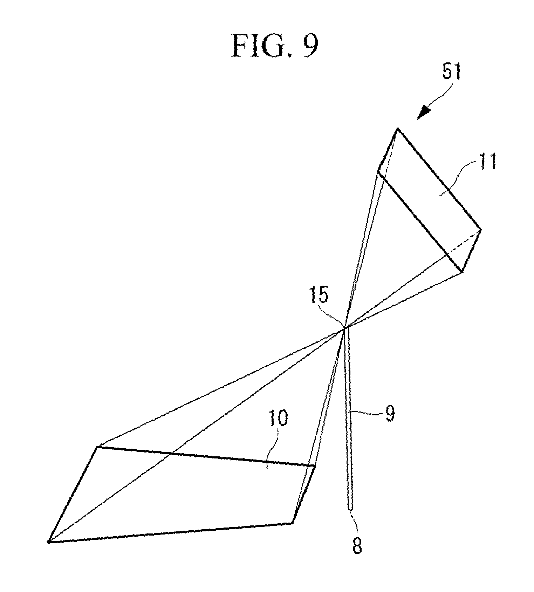

{FIG. 1} FIG. 1 is a schematic diagram of the configuration of a concentrated solar power gas turbine and a concentrated-solar-power-gas turbine power generation equipment having a solar central receiver according to a first embodiment of the present invention.
{FIG. 2} FIG. 2 is a diagram for explaining the relationship between the solar central receiver according to the first embodiment of the present invention and a heliostat field on which heliostats for focusing sunlight onto this solar central receiver are disposed.
{FIG. 3} FIG. 3 is a diagram for explaining the outline of the heliostats.
{FIG. 4} FIG. 4 is a schematic diagram of the configuration of the inside of the solar central receiver according to the first embodiment of the present invention.
{FIG. 5} FIG. 5 is a diagram for explaining the relationship between a solar central receiver according to a second embodiment of the present invention and a heliostat field on which heliostats for focusing sunlight onto this solar central receiver are disposed.
{FIG. 6} FIG. 6 is a schematic diagram of the configuration of the inside of the solar central receiver according to the second embodiment of the present invention.
{FIG. 7} FIG. 7 is a cross-sectional view showing the relevant part of the solar central receiver according to a third embodiment of the present invention.
{FIG. 8} FIG. 8 is a cross-sectional view showing the relevant part of the solar central receiver according to a fourth embodiment of the present invention.
{FIG. 9} FIG. 9 is a diagram for explaining the relationship between a solar central receiver according to a fifth embodiment of the present invention and a heliostat field on which heliostats for focusing sunlight onto this solar central receiver are disposed.

### {Reference Signs List}

- 1: concentrated solar power gas turbine
- 3: solar central receiver
- 8: ground
- 9: tower
- 10: heliostat field
- 10a: one edge
- 11: solar radiation receiving surface
- 12: heliostat
- 14: casing
- 15: solar radiation inlet
- 16: heat transfer pipe
- 16a: heat transfer pipe
- 16b: heat transfer pipe
- 21: solar central receiver
- 22: solar radiation receiving surface
- 22a: first edge
- 22b: second edge
- 23: heat transfer pipe
- 31: solar central receiver
- 32: heat transfer pipe
- 41: solar central receiver
- 42: heat transfer pipe
- 51: solar central receiver
- 100: concentrated-solar-power-gas turbine power generation equipment

### {Description of Embodiments}

Referring to FIGS. 1 to 4, a solar central receiver according to the first embodiment of the present invention will be described below.
FIG. 1 is a schematic diagram of the configuration of a concentrated solar power gas turbine and a concentrated-solar-power-gas turbine power generation equipment having a solar central receiver according to this embodiment, FIG. 2 is a diagram for explaining the relationship between the solar central receiver according to this embodiment and a heliostat field on which heliostats for focusing sunlight onto this solar central receiver are disposed, FIG. 3 is a diagram for explaining the outline of the heliostats, and FIG. 4 is a schematic diagram of the configuration of the inside of the solar central receiver according to this embodiment.

As shown in FIG. 1, the concentrated solar power gas turbine 1 is an apparatus mainly composed of a compressor 2 that compresses a compressible working fluid (a working fluid such as air) to raise the pressure thereof, a solar central receiver 3 that heats and raises the temperature of the compressible working fluid using the heat converted from sunlight, and a turbine 4 that converts heat energy possessed by the high-temperature high-pressure compressible working fluid into mechanical energy. That is, the concentrated solar power gas turbine 1 has the solar central receiver 3 that heats and raises the temperature of the compressible working fluid using the heat of sunlight energy, instead of a combustor that combust fuel, such as natural gas, to produce high-temperature high-pressure combustion gas.

Furthermore, by a configuration such that the generator 5 is coaxially connected to the concentrated solar power gas turbine so that the concentrated solar power gas turbine 1 drives the generator 5, a concentrated-solar-power-gas turbine power generation equipment 100 that generates power using sunlight is realized.
Note that reference sign 6 in the figure denotes a reheater for preheating the high-pressure compressible working fluid that has been raised in pressure by the compressor 2, using the exhaust heat of the compressible working fluid that is to be discharged into the air from an exhaust stack 7 after doing work in the turbine 4.

The solar central receiver 3 is an apparatus for converting sunlight into heat energy and, as shown in FIG. 2, is disposed on top of a tower 9 (the tip of the tower 9 having a height of, for example, 100 m) erected on the ground 8. A heliostat field 10 having, for example, a (substantially) square shape in plan view is defined on the ground 8, and a plurality of (for example, 400) light collectors (heliostats) 12 (see FIG. 3) that efficiently reflect sunlight to a solar radiation receiving surface 11 defined inside the solar central receiver 3 and having a (substantially) square shape in plan view are disposed on the heliostat field 10. Sunlight (not shown) collected (reflected) by the heliostats 12 enters the solar central receiver 3 through a solar radiation inlet 15 formed (provided) in the bottom of a casing 14 (see FIG. 4) constituting the solar central receiver 3, reaches a plurality of (for example, 500) heat transfer pipes (pipes) 16 (see FIG. 4) arranged on the solar radiation receiving surface 11 at (substantially) equal intervals (such that the distances between the central axes of the adjacent heat transfer pipes 16 in the longitudinal direction are (substantially) equal), and heats and raises the temperature of the high-pressure gaseous compressible working fluid passing through the heat transfer pipes 16.

Herein, in the northern hemisphere, the tower 9 is located at the center (or the south end) of one edge 10a defining the south end of the heliostat field 10, and in the southern hemisphere, the tower 9 is located at the center (or the north end) of one edge 10a defining the north end of the heliostat field 10. Furthermore, the heat transfer pipes 16 are disposed such that the longitudinal direction thereof extends in the south-north direction (in FIG. 2, the left-right direction) and such that the arrangement direction thereof extends in the east-west direction (in FIG. 2, the top-bottom direction).

Meanwhile, the solar radiation inlet 15 is an opening having, for example, a circular shape in plan view. Furthermore, the solar radiation receiving surface 11 is defined so as to be parallel to the heliostat field 10. That is, the heat transfer pipes 16 are disposed so as to be parallel to the heliostat field 10.
Note that, reference sign 17 in FIG. 4 denotes a heat insulator that is disposed behind the heat transfer pipes 16 (opposite the solar radiation inlet 15) and is disposed on the inner surface of the top of the casing 14.

As shown in FIG. 4, the heat transfer pipes 16 according to this embodiment are tubular members having a circular external shape in the cross section thereof. A heat transfer pipe 16a having the largest pipe diameter is disposed at the center (central portion) in the arrangement direction thereof, and heat transfer pipes 16b having the smallest pipe diameter are disposed at both ends (both end portions) in the arrangement direction thereof. In other words, the pipe diameters (the outside diameters and the inside diameters: the cross-sectional areas of the flow paths) of the heat transfer pipes 16 are defined so as to be substantially inversely proportional to the shortest distance from the solar radiation inlet 15 to the central axes of the respective heat transfer pipes 16 in the longitudinal direction.
With this configuration, the compressible working fluid passing through the respective heat transfer pipes 16 can be uniformly (evenly) heated, and the temperature of the compressible working fluid flowing out of the respective heat transfer pipes 16 can be made (arranged) to be uniform (even).

With the solar central receiver 3 according to this embodiment, the pipe diameters of the heat transfer pipes 16 are determined (defined) according to the distribution of the received heat at the solar radiation receiving surface 11 in the arrangement direction (the east-west direction). That is, the heat transfer pipe 16a having the largest pipe diameter is disposed at the center (central portion) in the arrangement direction, where the amount of heat received is greatest, and the heat transfer pipes 16b having the smallest pipe diameter are disposed at both ends (both end portions) in the arrangement direction, where the amount of heat received is smallest.
With this configuration, the compressible working fluid passing through the respective heat transfer pipes 16 can be uniformly (evenly) heated, and the temperature of the compressible working fluid flowing out of the respective heat transfer pipes 16 can be made (arranged) to be uniform (even).
Furthermore, because the heat transfer pipes 16 are arranged along the solar radiation receiving surface 11 parallel to the heliostat field 10, in other words, a flat surface, the supporting structure for supporting the heat transfer pipes 16 can be simplified, whereby the manufacturing costs can be reduced.

With the concentrated solar power gas turbine 1 having the solar central receiver 3 according to this embodiment, by uniformly heating the compressible working fluid passing through the heat transfer pipes, the temperature of the compressible working fluid directed from the solar central receiver 3 to the turbine 4 is raised to a higher value than by the conventional configuration. Thus, the turbine efficiency can be improved compared with the conventional configuration.

The concentrated-solar-power-gas turbine power generation equipment 100 includes the concentrated solar power gas turbine 1 having a better turbine efficiency than the conventional configuration, and, hence, the power generation efficiency is increased compared with the conventional configuration. Accordingly, the energy recovery rate can be improved, and the reliability can be improved.

Referring to FIGS. 5 and 6, a solar central receiver according to a second embodiment of the present invention will be described.
FIG. 5 is a diagram for explaining the relationship between a solar central receiver according to this embodiment and a heliostat field on which heliostats for focusing sunlight onto this solar central receiver are disposed, and FIG. 6 is a schematic diagram of the configuration of the inside of the solar central receiver according to this embodiment.

As shown in FIG. 5, instead of the solar radiation receiving surface 11, a solar radiation receiving surface 22 is defined inside the solar central receiver 21 according to this embodiment, and, as shown in FIG. 6, instead of the heat transfer pipes 16, heat transfer pipes 23 are provided in the solar central receiver 21 according to this embodiment, which are the difference to the above-described first embodiment. Because the other components are the same as those in the above-described first embodiment, the descriptions of these components will be omitted here.

As shown in FIG. 5, the solar radiation receiving surface 22 is a surface having, for example, a (substantially) square shape in plan view and is a curved surface (concave surface) having a first edge 22a defining the south end in the northern hemisphere or the north end in the southern hemisphere and a second edge 22b defining the north end in the northern hemisphere or defining the south end in the southern hemisphere, the edges being recessed (concave) toward the side opposite to the solar radiation inlet 15. Furthermore, the first edge 22a is formed on a radius R1 centered on the solar radiation inlet 15 (at a position spaced by a (substantially) equal distance from the solar radiation inlet 15), and the second edge 22b is formed on a radius R2 centered on the solar radiation inlet 15 (at a position spaced by a (substantially) equal distance from the solar radiation inlet 15).
Note that one end of the first edge 22a and one end of the second edge 22b are connected by a straight third edge 22c, and the other end of the first edge 22a and the other end of the second edge 22b are connected by a straight fourth edge 22d (see FIG. 6).

Furthermore, as shown in FIG. 6, a plurality of (for example, 500) heat transfer pipes (pipes) 23 having a circular external shape in the cross section thereof and the same outside diameters and inside diameters are arranged on the solar radiation receiving surface 22 at (substantially) equal intervals (such that the distances between the central axes of the adjacent heat transfer pipes 23 in the longitudinal direction are (substantially) equal).

With the solar central receiver 21 according to this embodiment, the solar radiation receiving surface 22 is determined (defined) so as to achieve a uniform (even) distribution of the received heat over the solar radiation receiving surface 22 in the arrangement direction (the east-west direction).
With this configuration, the compressible working fluid passing through the respective heat transfer pipes 23 can be uniformly (evenly) heated, and the temperature of the compressible working fluid flowing out of the respective heat transfer pipes 23 can be made (arranged) to be uniform (even).
Furthermore, because the heat transfer pipes 23 are arranged such that the central portion thereof in the arrangement direction (the east-west direction) extends along the curved surface protruding toward the side opposite to the solar radiation inlet 15, the supporting structure for supporting the heat transfer pipes 23 can be simplified, whereby the manufacturing costs can be reduced.
Furthermore, because only the heat transfer pipes 23 having the same pipe diameter are required (the solar central receiver is formed only of the heat transfer pipes having the same pipe diameter), the supporting structure for supporting the heat transfer pipes 23 can be further simplified, whereby the manufacturing costs can be further reduced.

With the concentrated solar power gas turbine having the solar central receiver 21 according to this embodiment, by uniformly heating the compressible working fluid passing through the heat transfer pipes, the temperature of the compressible working fluid directed from the solar central receiver 21 to the turbine 4 is raised to a higher value than by the conventional configuration. Thus, the turbine efficiency can be improved compared with the conventional configuration.

The concentrated-solar-power-gas turbine power generation equipment includes a concentrated solar power gas turbine having a better turbine efficiency than the conventional configuration, and, hence, the power generation efficiency is increased compared with the conventional configuration. Accordingly, the energy recovery rate can be improved, and the reliability can be improved.

Referring to FIG. 7, a solar central receiver according to a third embodiment of the present invention will be described.
FIG. 7 is a cross-sectional view showing the relevant part of the solar central receiver according to this embodiment.
As shown in FIG. 7 a solar central receiver 31 according to this embodiment is different from the above-described first embodiment in that heat transfer pipes 32 are provided, instead of the heat transfer pipes 16. Because the other components are the same as those in the above-described first embodiment, the descriptions of these components will be omitted here.

In this embodiment, a plurality of (for example, 500) heat transfer pipes (pipes) 32 having a circular external shape in the cross section thereof and the same outside diameters and inside diameters are arranged on the solar radiation receiving surface 11 (see FIG. 2 or 4) such that they are most dense at the center (the central portion) in the arrangement direction and least dense at both ends (both end portions), while reducing the density from the center (the central portion) toward both ends (both end portions). In other words, the distances between the heat transfer pipes 32 (pitches: the distances between the central axes of the adjacent heat transfer pipes 32 in the longitudinal direction) are defined so as to be substantially proportional to the shortest distance to the heliostats 12 (see FIG. 3) that are disposed on the one edge 10a (see FIG. 2) located at a position point symmetrical with respect to the solar radiation inlet 15 (see FIG. 2 or 4).

In the solar central receiver 31 according to this embodiment, the distance between (density of) the heat transfer pipes 32 is determined (defined) according to the distribution of the received heat at the solar radiation receiving surface 11 in the arrangement direction (the east-west direction). That is, the largest number of heat transfer pipes 32 are disposed at the center (the central portion) in the arrangement direction, where the amount of heat received is greatest, and the smallest number of heat transfer pipes 32 are disposed at both ends (both end portions) in the arrangement direction, where the amount of heat received is smallest.
Witch this configuration, the compressible working fluid passing through the respective heat transfer pipes 32 can be uniformly (evenly) heated, and the temperature of the compressible working fluid flowing out of the respective heat transfer pipes 32 can be made (arranged) to be uniform (even).
Furthermore, because the heat transfer pipes 32 are arranged along the solar radiation receiving surface 11 parallel to the heliostat field 10, in other words, a flat surface, the supporting structure for supporting the heat transfer pipes 32 can be simplified, whereby the manufacturing costs can be reduced.
Furthermore, because only the heat transfer pipes 32 having the same pipe diameter are required (the solar central receiver is formed only of the heat transfer pipes having the same pipe diameter), the supporting structure for supporting the heat transfer pipes 32 can be further simplified, whereby the manufacturing costs can be further reduced.

With the concentrated solar power gas turbine having the solar central receiver 31 according to this embodiment, the temperature of the compressible working fluid directed from the solar central receiver 31 to the turbine 4 is raised to a higher value than by the conventional configuration. Thus, the turbine efficiency can be improved compared with the conventional configuration.

The concentrated-solar-power-gas turbine power generation equipment includes a concentrated solar power gas turbine having a better turbine efficiency than the conventional configuration by uniformly heating the compressible working fluid passing through the heat transfer pipes, and, hence, the power generation efficiency is increased compared with the conventional configuration. Accordingly, the energy recovery rate can be improved, and the reliability can be improved.

Referring to FIG. 8, a solar central receiver according to a fourth embodiment of the present invention will be described.
FIG. 8 is a cross-sectional view showing the relevant part of the solar central receiver according to this embodiment.
As shown in FIG. 8 the solar central receiver 41 according to this embodiment is different from the above-described first embodiment in that heat transfer pipes 42 are provided, instead of the heat transfer pipes 16. Because the other components are the same as those in the above-described first embodiment, the descriptions of these components will be omitted here.

In this embodiment, a plurality of (for example, 500) heat transfer pipes (pipes) 42 having a circular external shape in the cross section thereof and the same outside diameters and inside diameters are arranged on the solar radiation receiving surface 11 (see FIG. 2 or 4) at (substantially) equal intervals (such that the distances between the central axes of the adjacent heat transfer pipes 42 in the longitudinal direction are (substantially) equal).

With the solar central receiver 41 according to this embodiment, because the heat transfer pipes 42 are arranged at equal intervals along the solar radiation receiving surface 11 parallel to the heliostat field 10, in other words, a flat surface, the supporting structure for supporting the heat transfer pipes 42 can be simplified, whereby the manufacturing costs can be reduced.
Furthermore, because only the heat transfer pipes 42 having the same tube diameter are required (the solar central receiver is formed only of the heat transfer pipes having the same pipe diameter), the supporting structure for supporting the heat transfer pipes 42 can be further simplified, whereby the manufacturing costs can be further reduced.

In the concentrated solar power gas turbine having the solar central receiver 41 according to this embodiment, the distance (density) of the heliostats 12 in the east-west direction is determined (defined) so as to achieve a uniform (even) distribution of the received heat over the solar radiation receiving surface 11 in the arrangement direction (the east-west direction).
With this configuration, the compressible working fluid passing through the respective heat transfer pipes 42 can be uniformly (evenly) heated, and the temperature of the compressible working fluid flowing out of the respective heat transfer pipes 42 can be made (arranged) to be uniform (even). Thus, the temperature of the compressible working fluid directed from the solar central receiver 41 to the turbine 4 can be raised to a higher value than by the conventional configuration, and the turbine efficiency can be improved compared with the conventional configuration.

The concentrated-solar-power-gas turbine power generation equipment having the solar central receiver 41 according to this embodiment includes a concentrated solar power gas turbine having a better turbine efficiency than the conventional configuration, and, the power generation efficiency is increased compared with the conventional configuration by uniformly heating the compressible working fluid passing through the heat transfer pipes. Accordingly, the energy recovery rate can be improved, and the reliability can be improved.

Referring to FIG. 9, a solar central receiver according to a fifth embodiment of the present invention will be described.
FIG. 9 is a diagram for explaining the relationship between a solar central receiver according to this embodiment and a heliostat field on which heliostats for focusing sunlight onto this solar central receiver are disposed.

As shown in FIG. 9, a solar central receiver 51 according to this embodiment is different from the above-described first to fourth embodiments in that the solar radiation receiving surface 11 is tilted (inclined) so as to conform to the shape, in plan view, of the heliostat field 10, which has a (substantially) trapezoidal shape (in this embodiment, an isosceles trapezoidal shape) in plan view. Because the other components are the same as those in the above-described first to fourth embodiments, the descriptions of these components will be omitted here.

With the solar central receiver 51 according to this embodiment, even when a (substantially) square-shaped ground, in plan view, serving as the heliostat field 10 cannot be ensured, sunlight can be focused on the solar central receiver 51, only by tilting the solar radiation receiving surface 11 so as to conform to the shape, in plan view, of the heliostat field 10.
Because the other advantages are the same as those in the above-described first to fourth embodiments, the descriptions thereof will be omitted here.

Note that the present invention is not limited to the above-described embodiments, but may be variously modified within the scope not departing from the spirit of the present invention.

## Claims

1. A solar central receiver comprising: a plurality of heat transfer pipes arranged in the south-north direction; and a casing accommodating the heat transfer pipes and having a solar radiation inlet through which sunlight reflected by heliostats disposed on the ground is transmitted to the lower surface side of the heat transfer pipes, the solar central receiver being disposed on top of a tower erected on the ground,
wherein the heat transfer pipes are disposed at equal intervals on a solar radiation receiving surface parallel to a heliostat field on which the heliostats are disposed or a solar radiation receiving surface inclined with respect to the heliostat field on which the heliostats are disposed, and the pipe diameter of each heat transfer pipe is defined so as to be substantially inversely proportional to the shortest distance from the solar radiation inlet to the central axis of the heat transfer pipe in the longitudinal direction.

2. A solar central receiver comprising: a plurality of heat transfer pipes having the same pipe diameter that are arranged in the south-north direction; and a casing accommodating the heat transfer pipes and having a solar radiation inlet through which sunlight reflected by heliostats disposed on the ground is transmitted to the lower surface side of the heat transfer pipes, the solar central receiver being disposed on top of a tower erected on the ground,
wherein a first edge defining the south end in the northern hemisphere or defining the north end in the southern hemisphere, and a second edge defining the north end in the northern hemisphere or defining the south end in the southern hemisphere are recessed toward the side opposite to the solar radiation inlet, and the heat transfer pipes are disposed at equal intervals on a solar radiation receiving surface whose the first edge and the second edge are located at the same distance from the solar radiation inlet.

3. A solar central receiver comprising: a plurality of heat transfer pipes having the same pipe diameter that are arranged in the south-north direction; and a casing accommodating the heat transfer pipes and having a solar radiation inlet through which sunlight reflected by heliostats disposed on the ground is transmitted to the lower surface side of the heat transfer pipes, the solar central receiver being disposed on top of a tower erected on the ground,
wherein the heat transfer pipes are disposed on a solar radiation receiving surface parallel to a heliostat field on which the heliostats are disposed or a solar radiation receiving surface inclined with respect to the heliostat field on which the heliostats are disposed, and the distances between the heat transfer pipes are defined so as to be substantially proportional to the shortest distance to the heliostats disposed on one edge of the heliostat field, the edge being located at a position point symmetrical with respect to the solar radiation inlet and located at the south end in the northern hemisphere or at the north end in the southern hemisphere.

4. The concentrated solar power gas turbine comprising the solar central receiver according to any one of Claims 1 to 3.

5. A concentrated solar power gas turbine comprising: heliostats disposed on a heliostat field defined on the ground; and a solar central receiver including a plurality of heat transfer pipes having the same pipe diameter that are arranged in the south-north direction, and a casing accommodating the heat transfer pipes and having a solar radiation inlet through which sunlight reflected by the heliostats is transmitted to the lower surface side of the heat transfer pipes, the solar central receiver being disposed on top of a tower erected on the ground,
wherein the heat transfer pipes are disposed at equal intervals on a solar radiation receiving surface parallel to the heliostat field on which the heliostats are disposed or a solar radiation receiving surface inclined with respect to the heliostat field on which the heliostats are disposed, and the distances between the heliostats in the east-west direction are defined so as to be substantially inversely proportional to the shortest distance to the heliostats disposed on one edge of the heliostat field, the edge being located at a position point symmetrical with respect to the solar radiation inlet and located at the south end in the northern hemisphere or at the north end in the southern hemisphere.

6. The concentrated-solar-power-gas turbine power generation equipment comprising the concentrated solar power gas turbine according to Claim 4 or 5.
